(19) **Europäisches Patentamt / European Patent Office / Office européen des brevets**

(11) **EP 1 867 750 A2**

(12) **EUROPEAN PATENT APPLICATION**
published in accordance with Art. 158(3) EPC

(43) Date of publication:
**19.12.2007 Bulletin 2007/51**

(21) Application number: **05792795.6**

(22) Date of filing: **07.09.2005**

(51) Int Cl.:
$C23C\ 10/18$ (2006.01)  $C23C\ 10/26$ (2006.01)
$C23C\ 26/00$ (2006.01)  $C10M\ 125/30$ (2006.01)
$F16C\ 33/14$ (2006.01)

(86) International application number:
**PCT/RU2005/000455**

(87) International publication number:
**WO 2006/046885 (04.05.2006 Gazette 2006/18)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.10.2004 RU 2004131366**

(71) Applicant: **Chervonenko, Jury Aleksandrovich St. Petersburg 193076 (RU)**

(72) Inventor: **Chervonenko, Jury Aleksandrovich St. Petersburg 193076 (RU)**

(74) Representative: **Schmit, Christian Norbert Marie Schmit-Chretien-Schihin 8, place du Ponceau F-95000 Cergy (FR)**

(54) **COMPOSITION FOR FORMING A NEOFORMED LAYER ON WEARING SURFACES**

(57) The compound for creating a newly formed layer on metal friction surfaces relates to machine building.

When repairing and maintaining diverse machines and mechanisms, the compound enables to create a newly formed layer on metal friction surfaces. This layer has both the effect of self-recovery during operation and high tribotechnical characteristics, improved wear resistance and corrosion resistance.

The specific feature is the use of natural nickel-iron-magnesium hydrisalacates that in this case act as the base and catalyst, e.g., forsterite $Mg_29SIO_4$) or fayalite $Fe_2(SiO_4)$ or one similar thereto, which favors the creation of a newly formed layer on metal friction surfaces and initiates therein the process of mass exchange self-oscillations.

**EP 1 867 750 A2**

**Description**

**Pertinent art**

This invention relates to machine building, in particular, to substances meant for creating a newly formed layer on abraded metal surfaces of parts of machines and mechanisms. This invention can predominantly be used to create a layer on the aforementioned surfaces of respective parts, having the effect of both self-recovery during operation and high tribotechnical characteristics, improved wear resistance and corrosion resistance.

**Prior art**

A compound is known for recovery of metal surfaces and used in a method of forming a protective coating, selectively compensating for the wear of friction and contact surfaces of parts of machines (see RF Patent No. 2135638, Intern. Class. 26/00, published Aug. 27.1999). The known method includes a finely dispersed mixture of 50-80 mass % of ophite, 10-40 mass % of nephrite, 1-10 mass % of shungite and up to 10 mass % of catalyst. This compound is introduced into a standard lubricant and, together with the lubricant, applied to friction surfaces. The friction surfaces are then run in during 0,5-1,5 hours, in which process a cermet protective coating is formed for surfaces subject to wear when exposed to friction during operation of the machine.

However, in the process of forming a protective coating at the stage of operation of the machine the known compound does not enable to obtain a coating with predetermined predictable properties, since the process of forming a coating is spontaneous and uncontrollable, which leads to the formation of a coating, uneven in thickness and non-uniform by structure. Said circumstance, along with different space configuration of crystal lattices of ophite and nephrite minerals used as major components accounts for insufficient strength and reliability of the formed cermet protective coating which *per* se performs the function of a modified protective coating.

Most close to the solution being applied for is a compound for modification of metals and recovery of metal surfaces (see RF Patent 2169208, Intern. Class. C23C 20/00, B23P 6/00, published 20 June, 2001). The known compound contains a finely dispersed mixture of serpophite and catalyst and also additionally contains kaolinite and catalyst with the ratio of components, mass %, being as follows:

kaolinite -----10 - 40;
catalyst -----5 - 10;
catalyst -------5 - 10;
serpophite -----40 - 70.

It should be additionally noted that the mixture's dispersion makes up 0,1 - 10,0 mcm.

The known compound enables to modify metals and recover metal surfaces with the formation thereon of metal ceramics with predetermined predictable parameters in volume, as well as on the surface of ferrous and nonferrous metals and respective alloys.

The known compound, however, has essential disadvantages. It is difficult to use for specific surfaces of machine parts, as each timne the compound is to be selected with different ratios of components specified therein, taking into account chemical composition of the metal friction surface and its physical-mechanical properties. This is particularly difficult to do in the case of friction of parts made from different metals and of different friction pairs made from heterogeneous metals, the lubrication system being the same, which is one of the most widely spread and necessary conditions in creating machines and mechanisms. Moreover, utility time of the known compound enabling to modify a cermet layer on friction surfaces of parts is limited by the time of using such surface which is indefinite due to its unpredictable wear time and impossibility of self-recovery of said cermet layer due to the absence of conditions necessary for mass exchange processes to evolve.

Practical testing of the known compound conducted by the applicant on various models of internal combustion engine (ICE) showed that the result was the formation of a layer having a "loose and irregular structure. This layer is not integral with the substrate metal it is formed upon, as is clearly reflected by their interface, rather it is the result of a formed modified protective layer which, by its nature, cannot in this case be formed as having earlier predicted properties and self-recovery effect.

**Disclosure of the invention**

The task of this invention is to find a new compound which makes it possible to produce on metal surfaces of parts subject to friction a newly formed layer with preset properties which destroys during friction of wearing-out contact metal surfaces and, at the same time, self-recovers in the process of operation.

The task set is solved through introducing natural nickel-iron-magnesium hydrosilicates into the compound designed to create a newly formed layer for wearing-out metal friction surfaces containing a finely dispersed base in the form of a mixture and catalyst with the following ratio of components, mass %:

nickel-iron-magnesium hydrosicilates -----90-95
catalyst -----5-10.

At least one mineral from the olivine group, e.g., forsterite or fayalite or similar thereto can be used as a catalyst.
Preferable in the compound applied for is correspondence between the dimension of grains in the base and those in the catalyst, the size of grains in the whole mixture being 1 to 100 mcm.
Nickel-iron-magnesium hydrosilicates introduced into the compound can be presented by a generalized chemical formula - $(Ni_x - Fe_x - Mg_x)(Si_2O_5)(OH)_4$. The name used and formula presented are a generalization of a strictly defined mineral group of metal hydrates including, among others, serpentinites, kaolimites, chlorites e.o., and individually expressed in formulas pertaining to main minerals of groups whose base is constituted by hydrates of silicates having the same structural base consisting of hydrated silicon oxides differing only by the content on external bonds of magnesium, iron and nickel metals capable of substitution, other conditions being equal, e.g.:

| greenalite | $Fe_3(Si_2O_5)(OH)_4$ - ferro (iron) hydrosilicate |
| nepouite | $Ni_3(Si_2O_5)(OH)_4$ - nickel hydrosilicate |
| antigorite | $Mg_6(Si_4O_{10})(OH)_8$ - magnesium hydrosilicate, e.o. |

Catalysts such as forsterite $Mg_2(SiO_4)$ or fayalite $Fe_2(SiO_4)$ or those similar to them activate the process of mass exchange self-oscillations being basic for the layer to manifest self-recovery effect. In contrast to the current tendency in creating compounds for modification of metals and recovery of metal surfaces by selecting a large number of components, the technical solution applied for is built on another tendency logically not ensuing from the prior art, but aimed at reducing the number of components involved.
In the known compound, serpophite is a totally independent component which, when the known compound is used, enters into the general crystal formation reaction with other individual components within the compound. In the compound allied for, serpophite can be or not be one of the elements in the general crystal structure of nickel-iron-magnesium hydrosilicates. This shows that in the compound applied for serpophite is not a compound-forming component.
In the aggregate, use of the new base having a high application universality and essentially different matter macrostructure imparts other distinctive physical-mechanical and physiochemical properties to both compound and newly formed layer. As a result, it becomes possible to create a newly formed layer on wearing-out friction surfaces in which mass exchange oscillatory processes take place. They unfold in accordance with the known scheme of wearless friction in a closed tribosystem whose theoretical basics were disclosed in the D.N. Garkunov' s theory (see, for example, Selective transfer in friction-prone assemblies. Moscow: Transport, 1969, p 103).

**Embodiments of the invention**

The compound applied for contains a mixture including any of listed minerals from any said group: serpentinites or chlorites, with any of minerals from olivine group obtained by ultrasonic dispersion under certain regimes in any colloidal solution made on the base of e.g. mineral oils or any other liquids or consistent solutions not changing physical-mechanical and chemical properties of said minerals.
In their initial base, components further participating in creating a newly formed layer already make a single crystal structure (lattice). Therefore, initial preparation of the base consists in imparting to the base sizes suitable for introduction thereof into the contact zone of friction surfaces of parts. The presence of a catalyst, for instance, forsterite or fayanite, makes it possible to initiate the process of mass exchange between contacting surfaces. It should be noted that, as shown by experiments carried out by the applicant, the catalyst plays key role in the process of synthesis of the newly formed layer and manifestation by it of the self-recovery effect. This role is similar to the function it manifests in synthesis processes, namely magnesium-helium-silicon - "Forsteite-cycle", proceeding at relatively low pressures and temperatures (see O.M. Kalinin and T.L. Marinitch Nuclear Fusion and Superfluidity at Room Temperature, "Space and Time" magazine, 1989).
Thus, the compound applied for enables during mutual friction of surfaces newly formed thanks to its application to expose them to definite wear, which is an indispensable and sufficient condition ensuring simultaneous development of self-oscillatory "pendulous" mass exchange processes between such wearing-out newly formed friction surfaces of one closed tribosystem. Ensuring such "pendulous" self-oscillatory mass exchange process is precisely the gist of manifestation of self-recovery effect in the wearing-out newly formed layer on mutually rubbing surfaces of one closed tribosystem. This is attained thanks to the appearance of super-finely dispersed particles, i.e. powder of up to 0,1 mcm in dimension, emerging while the newly formed layer wears out in the process of friction and being capable of ionizing and polarization relative to the "parental" base of the surface. This new property acquired by particles orientates them within the closed space of the existing tribosystem so that they start moving to the surface opposite to the "parental" one. Here, the role of a third carrier of such particles is played by the lubricant present between surfaces of the friction pair. The lubricant ensures the closeness of the system by preventing the environment from affecting particles released during friction. In the case of a relative uniformity of physiochemical properties, structural makeup of particles and material of the newly formed layer from which they separate as a result of friction, great surface activity and high pressures appearing in micro-volumes they have come across at the interaction of surfaces of the closed tribosystem, these articles instantly enter into the joint crystal formation reaction with the newly formed surface of the opposite "parental" one. Correspondingly, similar particles torn away from the opposite surface tend to occupy their place. This process stops at termination of friction and resumes with the new friction cycle. Friction, reciprocal displacement of surfaces relative to one another, and pressure appearing in micro-volumes of such closed tribosystem play the role of energy activator and are sufficient conditions. Specific structure and definite physiochemical and physical-mechanical properties of particles and surface itself that is newly formed thanks to the application of said compound are necessary conditions for the onset of such mass exchange "pendulous" self-oscillatory process.

It was experimentally established that in case of using nickel-iron-magnesium hydrosilicates in a n amount of less than 90 mass % the aforementioned properties of the compound applied for manifest themselves in a significantly less intensively unfolding process of mass exchange. This takes place owing to the creation of a newly formed layer, less uniform in its structure and, hence, properties, the number of particles, that are a product of the wear-out of this layer and have properties necessary for the process of mass exchange, being lower in the total mass.

When a catalyst is used in an amount of less than 5 mass %, the rate of "self-oscillatory" pendulous mass exchange process greatly slows down to become unstable in time and quality due to insufficient power supply for general crystal formation of particles mentioned above (products of wear from the newly formed layer) with the mass of the newly formed layer.

Using nickel-iron-magnesium hydrosilicates in an amount of more than 95 mass % and catalyst in an amount of more than 10 mass % is economically inexpedient.

It should be also noted that using a compound with a dispersion of less than 1 mcm is economically unjustified as its production becomes a greatly labor-consuming process. Experiments showed that using a compound with a dispersion of more than 100 mcm does not ensure stable manifestation of self-recover effect. This is obviously connected with the specific structure of the newly formed layer and dimension of particles received during its destruction, i.e. wear.

An experiment carried out by the applicant showed that the compound in accordance with the proposed invention builds a newly formed layer performing protective function and has the self-recovery effect. In the process of said experiments the applicant made respective photographs ("origin- end" sampling) of the newly formed layer at various stages of the complete cycle of the process of self-recovery effect's manifestation, i.e. "silting" of the micro-cavity formed as a result of destructive wear of the surface itself. The pictures were shot from one contact spot on the sample's surface during testing on friction machine SMT-1.

The layer which grows as a result of the self-recovery effect is identified as being homogenous with the initial "parental" newly formed layer, as there are no interfaces across the surface. This testifies to a unified crystal formation in the newly forming layer (building up at the place of a defect) and initial "parental" base of this layer destructed by wear. Also visible on the pictures are particles cold-hardened into the "parental" surface and yet not "merged" with the "parental" base. Dimension of such particles is less than 1 mcm. As was already noted, this layer has the self-recovery effect, which enables to maintain friction surfaces within the limits of operational exactingness of mechanical closed tribosystems.

As was mentioned above, the following can be considered a generalized chemical formula of nickel-iron-magnesium hydrosilacates: $(Ni_x - Fe_x - Mg_x)(Si_2O_5)(OH)_4$. It also includes at least hydrated silicon oxides differing only by the content on external bonds of magnesium, iron, and nickel metals capable of substitution, other conditions being equal, e.g.:

| | |
|---|---|
| Greenalite | $Fe_3(Si_2O_5)(OH)_4$-ferro (iron) hydrosilicate |
| nepouite | $Ni_3(Si_2O_5)(OH)_4$-nickel hydrosilicate |
| antigorite | $Mg_6(Si_4O_{10})(OH)_8$- magnesium hydrosilicate and others. |

Peculiarities of the mineral group under study consist in the similarity of major properties, for example, relatively equal value of surface energy across the cleavage plane "001" (100-50 kJ/mole) and relatively equal energies of single bonds with hydrogen, around 300 kJ/mole, which in case of destruction of said bonds imparts to the minerals comparable properties connected with the atomization energy and virtually similar substitution ability and, in connection with this, equal dependence on the olivine group "fayalite-forsterite" being a recovering catalyst for artificially destroyed minerals used to make a mixture and jointly employed in the mechanical-physical-chemical process which is metallurgic for the working tribosystems (see RVS geoactivators, "Industrial Bulletin" magazine, No. 8, 2001).

In this case, physiochemical and physical-mechanical properties of an arbitrary mixture of these minerals ensure similar behavior of the entire mineral group contained in the mixture, should physical-mechanical impact be exerted on such mixture, for example, the effect on the part of working friction pairs (mechanical effect exercised by pressure and temperature). Exothermal and endothermal properties coincide virtually fully to the extent of mixing.

As mentioned above, the compound applied for contains a mixture including any of said mineral from any of their said groups with any mineral of olivine series obtained by ultrasonic dispersion under definite regimes in any colloidal solution made on the base of, e.g., mineral oils or any other liquids or consistent solutions not changing physical-mechanical and chemical properties of said minerals. Therefore, below are given examples which, the compound being the same, show the influence of a change in percentage relation between components, as well as examples with different components within the base applied for. In all examples, fundamental is at least the availability of three components and their belonging to the mentioned base. All the rest, i.e. quantitative relation of components, exert virtually no effect on final result.

Example 1. The compound applied for was studied on standard friction machines.

The objective was to check the dependence of tribotechnical characteristics of the newly formed layer showing signs of self-recovery effect that formed and is forming this layer during operation.

The experiment was carried out at the laboratory of Krylov Central Research Institute (St. Petersburg) and the dependence of friction parameters on time was studied in it.

Friction machine 2070SMT-1 ("Tochpribor" Association, town of Ivanovo) was used.

Samples included a sliding friction pair "roller-shoe", 40x13 material, HRC 60-64 hardness, 0.16-0.32 roughness of contact surface, $10 \pm 0,2$ mcm width along the generatrix, 75 kg = const. load upon the shoe, 3000 min-1 rate of rotation of the sample, working medium presented by 140-oil mixture with the repair and recovery "RVS"-brand compound which in this case contained:

|  |  |  |
|---|---|---|
| Greenalite | $Fe_3(Si_2O_5)(OH)_4$ | - 30 weight %; |
| nepouite | $Ni_3(Si_2O_5)(OH)_4$ | - 30 weight %; |
| antigorite | $Mg_6(Si_4O_{10})(OH)_8$ | - 30 weight %; |

the catalyst contained 10 mass %:

|  |  |  |
|---|---|---|
| forsterite | $Mg_2(SiO_4)$ | - 5 weight %; |
| fayalite | $Fe_2(SiO_4)$ | - 5 weight %. |

The depth of submersion of the sample into the mixture was 3-5 mm; water temperature was $80 \pm 2,5$ °C.

Smooth micrometer MK, TK-type hardness gauge, 4-th class analytical laboratory balance and model 296 roughness indicator were used for measurements.

Wear value of the sample (AG) attributed to friction was determined by comparing the mass of the sample before testing ($G_o$) and that of the sample after testing (G):

$$AG = G_o - G, \text{ g.}$$

The value of relative wear of the sample (DG) resulting from testing was determined as the ratio of wear (AG) to the initial mass of the sample: $DG = AG/G_o \times 100\%$.

The results of changes in friction factor and mass of the sample depending on recovery time are given in Table 1.

Table 1

| Recovery time, hrs | Friction factor | Change of the sample's mass, g |
|---|---|---|
| Initial state | 0,018 | |
| 10 | 0,010 | - 0,03 |

(continued)

| Recovery time, hrs | Friction factor | Change of the sample's mass, g |
|---|---|---|
| 24 | 0, 012 | - 0,036 |
| 40 | 0, 006 | - 0,012 |
| 72 | 0,005 | - 0, 004 |
| 92 | 0, 007 | 0, 001 |
| 112 | 0,004 | 0,008 |
| 136 | 0, 009 | 0, 005 |
| 160 s | 0,005 | 0,007 |
| 184 | 0, 007 | 0, 004 |
| 212 | 0,004 | 0,006 |

Table 1 evidences direct dependence between the extent of wear of the sample and friction factor of wearing-out surfaces. As shown by the experiments conducted by the applicant, this phenomenon is also repeated in studies of the repair and recovery compound (RVS) applied for on other friction machines under other conditions and regimes.

Examining changes of the sample's mass, one can see that these changes occur in an oscillatory manner with gradual leveling of the process of oscillation (change of the mass). Friction factor reduces by an order, while the mass changes in an oscillatory process unfolding towards increment, which is typical for the created newly formed layer capable of destroying during friction of contact surfaces and of self-recovering during operation.

Example 2. Several different compounds were prepared to make a comparative analysis into their ability to produce newly formed antifriction layers on friction surfaces of metal parts.

The tested parameter was a different mass % content of components of the base and catalyst with an equal dispersion and equal total ratio of mass % of the base and catalyst in the compound.

In producing the compounds, use was wade of various combinations and percentage ratio of masses of the group of minerals explicitly characterizing the class of nickel-iron-magnesium hydrosilicates (greenalit $Fe_3(Si_2O_5)(OH)_4$, nepuoite $Ni_3(Si_2O_5)(OH)_4$, antigorite $Mg_6(Si_4O_{10})(OH)_8$, lysardite $Mg_6(Si_4O_{10})(OH)_8$ chrysotile $Mg_6(Si_4O_{10})(OH)_8$) used as the base, and olivine group (forsterite $Mg_2(SiO_4)$, fayalite $Fe_2(SiO_4)$ limiting the series) used as a catalyst in the invention applied for.

The following compounds were used in this case:

RVS-1 compound whose base contained 90 mass % of:

greenalite     $Fe_3(Si_2O_5)(OH)_4$- 30 mass 5;
nepouite     $Ni_3(Si_2O_5)(OH)_4$- 30 mass %;
antigorite     $Mg_6(Si_4O_{10})(OH)_8$- 30 mass %;

the catalysts contained 10 mass % of:

forsterite     $Mg_2(SiO_4)$ - 5 mass %;
fayalite     $Fe_2(SiO_4)$ - 5 mass %.

RVS-2 compound whose base contained 90 mass % of:

Nepouite     $Ni_3(Si_2O_5)(OH)_4$ - 25 mass %;
lysardite     $Mg_6(Si_4O_{10})(OH)_8$ - 65 mass %;

the catalyst contained 10 mass % of:

forsterite     $Mg_2(SiO_4)$ - 2 mass %;
fayalite     $Fe_2(SiO_4)$ - 8 mass %.

RVS-3 compound whose base contained 90 mass % of:

Greenalite $Fe_3(Si_2O_5)(OH)_4$- 10 mass %;
antigorite $Mg_6(Si_4O_{10})(OH)_8$ - 35 mass %;
lysardite $Mg_6(Si_4O_{10})(OH)_8$ - 45 mass %;

the catalyst contained 10 mass % of:

forsterite $Mg_2(SiO_4)$ - 9 mass %;
fayalite $Fe_2(SiO_4)$ - 1 mass %.

RVS-4 compound whose base contained 95 mass % of:

nepouite $Ni_3(Si_2O_5)(OH)_4$-23 mass %;
greenalite $Fe_3(Si_2O_5)(OH)_4$- 12 mass %;
antigorite $Mg_6(Si_4O_{10})(OH)_8$- 35 mass %;
lysardite $Mg_6(Si_4O_{10})(OH)_8$- 245 mass %;

the catalyst contained 5 mass % of:

forsterite $Mg_2(SiO_4)$ - 2,5 mass %;
fayalite $Fe_2(SiO_4)$ - 2,5 mass %.

RVS-5 compound whose base contained 90 mass % of:

Nepouite $Ni_3(Si_2O_5)(OH)_4$ - 20 mass %;
greenalite $Fe_3(Si_2O_5)(OH)_4$ - 15 mass %;
antigorite $Mg_6(Si_4O_{10})(OH)_8$- 30 mass %;
chrysotile $Mg_6(Si_4O_{10})(OH)_8$ - 25 mass %;

the catalyst contained 10 mass % of:

forsterite $Mg_2(SiO_4)$- 5 mass %;
fayalite $Fe_2(SiO_4)$ - 5 mass %.

The prepared compounds were tested on a FBM (four-ball friction machine) for the magnitude of wear.
Testing was carried out at the laboratory of "PTK-Terminal" (St. Petersburg) according to the method meeting standard GOST 9490-74.
All other conditions being equal, wear values in case of using the produced RVS turned out to be as follows:

RVS-1 - 0,65; RVS-2 - 0,72; RVS-3 - 0,68; RVS-4 - 0,70; and RVS-5 - 0.68.

The results obtained unambiguously indicate at the similar anti-friction properties of formed friction surfaces, in particular, anti-wear properties (major consumer appeal).
The results serve to confirm a conclusion about the efficiency of compounds differently filled with mineral components, if the general ratio of mass % of the base and catalyst corresponds to the accepted ones and mineral components belong to said group:

base (nickel-iron-magnesium hydrosilicates ($Ni_x$- $Fe_x$- $Mg_x$)$_3$($Si_2O_5$)(OH)$_4$) - 90-95 mass %;
catalyst (olivine mineral series ($Mg_{2-x}$-$Fe_x$)$_2SiO_4$)- 5-10 mass %.

Example 3. To check the efficiency of the compound with a ratio of components other than that applied for, a compound was produced containing 85 mass % of the base and 15 mass % of the catalyst.

The compound was used in treating the cylinder-and-piston group of an internal combustion engine (ICE), VAZ 2107 car.

After the compound was run in according to the standard technological cycle, the ICE was disassembled, and surfaces of the rings were studied for the presence of a newly formed layer.

The surfaces were examined using a mass spectrum analyzer at the laboratory of "Avtovaz" scientific and technological center (town of Tolyiatti).

An analysis into the surfaces under study showed the presence of clearly expressed bonds "silicon-iron". However, the quantitative relation (intensity) does not apparently correspond to the intensity obtained when applying compounds with the ratio of the base and catalyst applied for.

A comparative analysis into the elemental composition of surfaces shows that even a slight distortion in the ratio of components during production of the compound make its properties for forming layers on friction surfaces be obviously different. This is caused by the fact that a distortion in the ratios of the base and catalyst towards a higher content of the catalyst as the least cost-exacting element during production of the compound greatly reduces the efficiency of the entire compound.

Producing a compound with an increased content of the base leads to a considerable rise in the cost of the compound, which is economically inexpedient and does not justify the results obtained.

Example 4. A friction pair "ring- plate" was tested. Testing was carried out at the institute of fundamental and allied research attached to the Odessa Marine University (city of Odessa, Ukraine).

To carry out comparative laboratory tests, sample friction pairs were made from ST25-ST25 material. Grade DIZOLA M3004 [M-10B$_2$$^{©}$] oils were used as lubricants.

An addition of the compound (RVS) applied for with the base content of 95 mass % and catalyst content of 5 mass % to the lubricant made up 0,2% of oil volume.

Oil temperature in the bath at friction surfaces was measured using a thermocouple (copper-constantan).

Frictional torque was measured using a device enabling to balance forces on the lever of the rod with the sample fixed to its end. Then friction factor was computed by calculations.

The value of wear of samples was determined using the method of artificial bases. To this end, a hardness gauge, Vickers device, was used to draw imprints of a square-based pyramid on friction surfaces of the samples. With the help of a microscope, the diagonal length of the base was determined prior to and after the test.

$$h = \frac{1}{2\sqrt{2}\, tg\,\dfrac{\alpha}{2}} \cdot d,$$

The imprint depth was calculated according to the formula:

where:

h = depth of the imprint, mcm;
$\alpha$ = angle equal to 136° at the top between the opposite faces;
d = length of the diagonal, mcm.

The value of linear wear of a flat plane was determined as a difference of depths of the imprint before and after operation under each test regime.

Measurement accuracy h was $\pm$0,5 mcm.

Comparative tests were carried out in two stages on a 77MT-type reverse friction machine ensuring the velocity of reciprocation motion V = 0,3 m/s, and 2 with the load on the sample P = 112 kg/cm .

The first test stage was oil-driven work. The second stage was oil-driven work with the addition of a mineral compound (RVS) in the amount of 0,2% of oil volume.

Each stage included five operating modes differing in time.

An analysis into the results obtained shows that when working only on oil in all modes the ring wears out more intensively than the plate.

In 40 hours of work after the addition of RVS, the process of the ring's wear becomes stabilized, wear rate decreases, absolute wear values are twice lower than in the oil-driven mode. Absolute wear values of the plate in the first oil-driven operation mode are close to those obtained for the ring. In further modes the plate's wear decreases in comparison with the ring by an amount of 80 to 100%.

In the case of oil-driven work with an RVS added, the plate's wear rate is significantly slower than during oil-driven operation and stabilizes in 50 hours of operation at both stages. When working with an RVS added, the plate's absolute wear values decrease by a factor of 2 to 2,5.

Data obtained from the tests show that temperature values in the zone of friction (friction factor) and wear of the plate are of an oscillatory nature, which undoubtedly indicates at the ability of the material, from which the layer was formed, to self-regulate and recover physical-mechanical properties. In all probability, this is conditioned by the ability of the layer to substitute the worn-out mass for newly formed (substituted) masses through selecting necessary constituent elements from the system. This is also confirmed by the theory of transformations of a mineral compound (RVS) and a layer formed by it, these are when exposed to physical-mechanical effects under the conditions of a closed friction system.

Thus, practical implementation of the compound applied for enables to obtain a technical result consisting in that the compound applied for ensures the creation of a newly formed layer capable of destroying and self-recovering during operation and contact of metal surfaces undergoing friction. The newly formed layer in this event has improved tribotechnical characteristics, higher wear resistance, corrosion resistance and uniformity thanks to a reduced number of components involved. Actually, it "heals" defects on abraded metal surfaces of parts under the regime of their standard use, while the part acquires new improved service properties and the friction factor greatly reduces. Handling this invention is practice will make it possible to cut costs of repair and maintenance of diverse machines and mechanisms, as well as simplify this process.

**Industrial applicability**

The compound applied for was used in carburetor automobile engine 3M3-402.10 (4T 9.2/9.2) produced by Zavolzhsky Engine Works.

The engine is designed for installation in medium cars and "Gazel"-type mini-trucks and is one of the most popular engines in Russia.

Type: in-line four-stroke carburetor gasoline engine with fluid cooling;

| | |
|---|---|
| Number of cylinders: | 4; |
| Cylinder diameter, mm: | 92; |
| Piston travel: | 92; |
| Displacement volume, l: | 2,46; |
| Compression ratio: | 7,2; |
| Rated capacity, h.p.: | 90 at n = 4500 rpm; |
| Nominal torque, nm: | 170 at n = 2600 rpm; |
| Fuel type: | gasoline A-76. |

The compound applied for whose base has the components given below was introduced into the oil system:

| | | |
|---|---|---|
| Nepouite | $Ni_3(Si_2O_5)(OH)_4$ | - 20 mass %; |
| greenalite | $Fe_3(Si_2O_5)(OH)_4$ | - 15 mass %; |
| antigorite | $Mg_6(Si_4O_{10})(OH)_8$ | - 30 mass %; |
| chrysotile | $Mg_6(Si_4O_{10})(OH)_8$ | - 25 mass %; |

the catalyst contained 10 mass % of:

| | | |
|---|---|---|
| forsterite | $Mg_2(SiO_4)$ | - 5 mass %; |
| fayalite | $Fe_2(SiO_4)$ | - 5 mass %. |

After a 24-hours long operating time, when the appearance of a newly formed layer was noted on friction surfaces, all oil was discharged from the crankcase. This was done in order to exclude eventual presence therein of still unmating compound particles and their effect, as well as prevent oil from washing out particles, which emerge during the wear of the newly formed layer, from the working zone of the friction pair. Compression pressure (compression) was chosen as the most indicative parameter since it directly depends on the tightness of abutment of the pair "cylinder liner-compression rings", which in turn directly depends on the state of their working surfaces. Characteristics of the mean value of compression degree by cylinders, when said engine operates without oil and other conditions are equal, are given in Table 2.

Table 2

| Time, min | 5 | 20 | 30 | 40 | 50 | 60 | 70 | 80 | 90 | 100 | 110 | 120 |
|---|---|---|---|---|---|---|---|---|---|---|---|---|
| Compression pressure, kg. | 7,5 | 7,4 | 7,5 | 7,8 | 7,7 | 8,4 | 8,55 | 8,3 | 8,6 | 8,65 | 8,35 | 8,5 |

An analysis into Table 2 shows that compression pressure is retained at one level for a fairly long time and varies within the rage of 7,5 kg/cm to 8,5 kg/cm, which meets the requirements of the manufacturer.

Thus, practical implementation of the compound applied for makes it possible to create a newly formed layer having high tribotechnical characteristics, improved wear resistance and corrosion resistance. Actually, it "heals' defects on abraded metal surfaces of parts under the regime of their standard operation, the machine part in this case acquires new improved service properties, while friction factor significantly lowers. Handling this invention in practice will enable to cut costs of repair and maintenance of diverse machines and mechanisms, as well as simplify this process.

**Claims**

1. Compound for creating a newly formed layer on metal friction surfaces containing a finely dispersed base in the form of a mixture, and a catalyst, wherein as a finely dispersed base use is made of natural nickel-iron-magnesium hydrosilicates with the following ratio of components, mass %:

    nickel-iron-magnesium hydrosicilates     90-95
    catalyst                              5-10.

2. Compound in accordance to p.1, wherein dimension of grains of the base and catalyst correspond to one another and make up 1 mcm to 100 mcm.

3. Compound in accordance with p. 1, wherein at least one mineral from the olivine group is used as a catalyst.

4. Compound in accordance with p. 3, wherein forsterite is used as a catalyst.

5. Compound in accordance with p. 3, wherein fayalite is used as a catalyst.

6. Compound in accordance with p. 3, wherein forsterite and fayalite are used as a catalyst.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2135638 A

### Non-patent literature cited in the description

- *Selective transfer in friction-prone assemblies,* 1969, 103
- **O.M. KALININ ; T.L. MARINITCH.** *Nuclear Fusion and Superfluidity at Room Temperature,* 1989
- Industrial Bulletin. 2001